(19)

**Europäisches Patentamt**
**European Patent Office**
**Office européen des brevets**

(11) **EP 4 038 850 B1**

(12) **EUROPEAN PATENT SPECIFICATION**

(45) Date of publication and mention
of the grant of the patent:
**30.10.2024 Bulletin 2024/44**

(21) Application number: **20727616.3**

(22) Date of filing: **20.05.2020**

(51) International Patent Classification (IPC):
**H04L 27/34** *(2006.01)*

(52) Cooperative Patent Classification (CPC):
**H04L 27/3411; H04B 10/5053; H04B 10/516;**
H04L 27/3433

(86) International application number:
**PCT/EP2020/064104**

(87) International publication number:
**WO 2021/233536 (25.11.2021 Gazette 2021/47)**

(54) **A PEAK POWER EFFICIENT MODULATION FORMAT FOR UN-AMPLIFIED OPTICAL FIBER LINKS**

SPITZENLEISTUNGSEFFIZIENTES MODULATIONSFORMAT FÜR UN-AMPLIZIERTE OPTISCHE FASERVERBINDUNGEN

FORMAT DE MODULATION EFFICACE DE PUISSANCE DE CRÊTE POUR DES LIAISONS DE FIBRES OPTIQUES NON AMPLIFIÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.08.2022 Bulletin 2022/32**

(73) Proprietor: HUAWEI TECHNOLOGIES CO., LTD.
**Shenzhen, Guangdong 518129 (CN)**

(72) Inventors:
• **CALABRO, Stefano**
**80992 Munich (DE)**
• **SCHAEDLER, Maximilian**
**80992 Munich (DE)**
• **BOCHERER, Georg**
**80992 Munich (DE)**

(74) Representative: **Roth, Sebastian**
**Mitscherlich PartmbB**
**Patent- und Rechtsanwälte**
**Karlstraße 7**
**80333 München (DE)**

(56) References cited:
**US-A1- 2006 041 821     US-A1- 2006 045 197**

EP 4 038 850 B1

**Description**

<u>TECHNICAL FIELD</u>

The present disclosure relates to data transmission, and in particular, to data modulation using a class of punctured N-dimensional symbol constellations. A punctured N-dimensional symbol constellation is a full N-dimensional symbol constellation minus a subset of symbols. The disclosure provides a transmitting device, a signal format, and a transmitting method, wherein each is based on a punctured N-dimensional symbol constellation. In particular, the punctured N-dimensional symbol constellation may provide a peak power efficient modulation format, in particular, for transmission over un-amplified optical fiber links.

<u>BACKGROUND</u>

In digital communications, the transmit messages are mapped onto a discrete alphabet, often referred to as a symbol constellation.

In the case of bandpass systems, two orthogonal carrier phases, typically denoted as in-phase (I) and quadrature (Q) components, are used to span the symbol space. Thus, two-dimensional symbol constellations are a natural choice. By converse, on low-pass systems, one-dimensional constellations are typically adopted. However, the dimensionality of the constellations can be decoupled from the type of communication system. For example, also low-pass systems can employ two-dimensional constellations, if two distinct signaling intervals are used to span a two-dimensional space. In the same way, multi-dimensional symbol constellations (generally N-dimensional symbol constellations, wherein N is a positive integer larger than 1) can be employed both for IQ and low-pass systems.

The size of the symbol constellations determines how many bits can be mapped on each symbol. A symbol constellation of $2^n$ symbols can carry n bits per symbol.

The bijection between symbols and binary n-tuples is called bit mapping. In a Gray mapping the binary n-tuples of any two neighboring symbols differ in only one bit. Not all symbol constellations admit a Gray mapping. If a Gray mapping does not exist, a mapping that minimizes the Hamming distance between the binary n-tuples of neighboring symbols is called a quasi-Gray mapping.

A pragmatic approach to channel coding, called bit-interleaved coded modulation (BICM), consists in cascading a binary encoder and a bit-mapper at the transmitter and a bit-demapper and binary decoder at the receiver. In case a BICM is used, (quasi-)Gray mapping achieves the best performance. At the receiver the bit-demapper can provide tentative decisions (hard demapper) or probabilities of each bit being 0 or 1 (soft demapper).

The transmitter converts the sequence of discrete constellation symbols to a signal matched to the transmission channel, e.g. to a bandpass signal. Most practical transmitters are limited in the output power of the output signal. The limitation may arise from different factors as e.g. thermal issues or a nonlinear distortion.

If the available power budget depends on a bandpass power amplifier, the power limitation applies to the two-dimensional symbol constellation, i.e., to the I and Q components jointly. However, in many systems, including optical systems, the power limitation applies separately to the I and Q components of the symbol constellation.

To summarize, in many systems, including short reach optical systems, transmitters are limited in the output power of the output signal. The limitation may arise from laser output power and modulator loss. In this case, the power limitation applies independently to the I and Q components of the constellation. For a given transmitter, with a given peak power, the choice of the symbol constellation affects the average transmit power.

Unfortunately, conventionally used symbol constellations are optimized with respect to the noise sensitivity regardless of the peak-to-average power ratio (PAPR), or with respect to the PAPR in two dimensions. The PAPR in one dimension (PAPR-1D) has not been taken into account so far.

US 2006041821 A1 discloses a short length LDPC (Low Density Parity Check) code and modulation adapted for high speed Ethernet applications.

US 2006045197 A1 discloses LDPC coded 128 DSQ (Double Square QAM) constellation modulation and associated labeling.

<u>SUMMARY</u>

In view of the above-mentioned limitations and disadvantages, alternative symbol constellations are desired. An objective is to provide a class of symbol constellations that maximize the average transmit power, without compromising the noise sensitivity of the transmission system. In particular, the symbol constellations should be optimized with respect to the peak signal power in one dimension (PAPR-1D). In particular, a class of symbol constellations is desired for a peak power efficient modulation format for transmission over un-amplified optical fiber links.

The objective is achieved by the embodiments provided in the enclosed independent claims. Advantageous implementations of the embodiments of the invention are further defined in the dependent claims. In the following, parts of the description and drawings referring to embodiments not covered by the claims, are not part of the invention, but are illustrative examples necessary for understanding the invention.

In particular, embodiments of the invention base on a new N-dimensional symbol constellation design (method), which provides a class of N-dimensional symbol constellations, which have a beneficial combination of constellation geometry (constellation symbol positions) and, optionally, binary mapping. As a consequence, demapping has low complexity, a binary Forward Error Correction (FEC) engine can be used (BICM), and a good performance is achieved under a 1D peak power constraint.

A first aspect of the present disclosure provides a transmitting device configured to: generated a sequence of symbols by mapping a message onto a punctured N-dimensional symbol constellation, wherein N is a positive integer larger than 1, wherein the punctured symbol constellation is a full N-dimensional symbol constellation minus an exclusion set, wherein the exclusion set is a subset of symbols of the N-dimensional symbol constellation, wherein the full N-dimensional symbol constellation is a Cartesian product of N identical 1-dimensional symbol constellations; and transmit the sequence of symbols.

In other words, the punctured N-dimensional symbol constellation is the set difference of the full N-dimensional symbol constellation and the exclusion set (excluded subset of symbols). That means, the exclusion set is not included in the punctured N-dimensional symbol constellation. For example, the punctured N-dimensional symbol constellation may be obtained by omitting the constellation symbols of the exclusion set from the full N-dimensional symbol constellation. The exclusion set accordingly comprises one or more symbols from the full N-dimensional symbol constellation. The full N-dimensional symbol constellation is accordingly the punctured N-dimensional symbols constellation plus the exclusion set.

Due to the punctured N-dimensional symbol constellation used by the transmitting device of the first aspect, an average transmit power can be maximized, without compromising the noise sensitivity of the transmission system. In particular, an optimization with respect to the peak signal power in one dimension can be achieved. Further, a peak power efficient modulation format for transmission over, specifically, an un-amplified optical fiber link can be provided. These advantages are achieved by means of the choice of the exclusion set of the punctured N-dimensional symbol constellation.

In an implementation form of the first aspect, each symbol in the punctured N-dimensional symbol constellation has a label which is an N-tuple composed of N 1-dimensional bit labels.

Since constellation symbols are excluded, according to the exclusion set, also bit-label sequences may be excluded, i.e., not all sequences of bits may be valid.

In an implementation form of the first aspect, the transmitting device is further configured to generate the punctured N-dimensional symbol constellation by excluding the exclusion set from the full N-dimensional symbol constellation based on one or more N-dimensional constraints.

The transmitting device itself may calculate the symbol constellation used for the mapping of the message to be transmitted, i.e., it may also determine itself the exclusion set. The transmitting device may, however, also obtain the exclusion set (e.g., a precomputed exclusion set), and may determine the punctured N-dimensional symbol constellation based on the full N-dimensional symbol constellation and the obtained exclusion set. Alternatively, the transmitting device may also obtain directly the constellation symbols of the punctured N-dimensional symbol constellation, i.e., in this case the transmitting device does not generate the punctured N-dimensional symbol constellation.

In an implementation form of the first aspect, the one or more N-dimensional constraints are equations involving one or more or all of the bit labels of the symbols in the punctured N-dimensional symbol constellation.

In an implementation form of the first aspect, the bits of the message are pre-processed and mapped to the punctured N-dimensional symbol constellation, such that the one or more N-dimensional constraints are fulfilled.

The mapping may be non-trivial, for instance, if the message contains bit-sequences that violate one or more of the constraints. Therefore, the message may beneficially be pre-processed, in order to allow the exclusion constraint(s) to be respected.

In an implementation form of the first aspect, the Cartesian product is an N-dimensional Cartesian product determined from a Gray-labelled or Quasi-Gray-labelled 1-dimensional $2^M$ symbol constellation, and $2^M$ denotes a number of constellation symbols of the Gray-labelled or Quasi-Gray-labelled 1-dimensional $2^M$ symbol constellation.

In an implementation form of the first aspect, each of the N identical 1-dimensional symbol constellations consists of a number of Gray-mapped or Quasi-Gray-mapped symbols, particularly $2^M$ Gray-mapped or Quasi-Gray-mapped symbols.

Thus, the punctured N-dimensional symbol constellation supports Gray-labelling and Quasi-Gray-labelling. In another implementation form, a bit-labelling different from Gray-labelling and Quasi-Gray-labelling may also be used, for example, in a case where multi-level coding with multi-stage decoding is used instead of BICM.

In an implementation form of the first aspect, the exclusion set comprises the symbols of the full N-dimensional symbol constellation with the highest bit error probability given a determined demapping strategy.

In an implementation form of the first aspect, the bit label is a Gray or Quasi-Gray bit label and the determined demapping strategy is bitwise.

In an implementation form of the first aspect, the determined demapping strategy is bitwise, and is followed by post-processing accounting for one or more N-dimensional constraints.

In an implementation form of the first aspect, the exclusion set is determined by minimizing a bit error probability under a 1-dimensional peak power constraint on the punctured N-dimensional symbol constellation.

Thus, the punctured N-dimensional symbol constellations can be optimized with respect to the peak signal power in one dimension (PAPR-1D).

In an implementation form of the first aspect, the symbols are transmitted over an un-amplified optical fiber link.

The punctured N-dimensional symbol constellations can, in particular, provide a peak power efficient modulation format for transmission over un-amplified optical fiber links.

In an implementation form of the first aspect, the full N-dimensional symbol constellation is a square shaped 2-dimensional symbol constellation; and the exclusion set comprises one or more inner symbols of the 2-dimensional symbol constellation.

In an implementation form of the first aspect, the punctured N-dimensional symbol constellation is a 2-dimensional symbol constellation comprising 32 constellation symbols; the full N-dimensional symbol constellation is a 2-dimensional symbol constellation comprising 36 constellation symbols; and the exclusion set comprises four inner symbols of the 2-dimensional symbol constellation.

Notably, the 2-dimensional symbol constellation comprising 36 constellation symbols is a Cartesian product of two identical 1-dimensional symbol constellations. These 1D symbol constellations have each 6 constellation symbols. A 1D bit-label for these 6 constellation symbols may be obtained by taking a 1D bit-label for 8 constellation symbols (i.e., 3 bits, e.g., a Gray-label) and then excluding the 2 outer constellation symbols. In other words, a constraint on the 1D bit-label may be the exclusion of the two outer constellation symbols of a 1D symbol constellation Gray-labelled with 3 bits.

In an implementation form of the first aspect, transmitting the sequence of symbols comprises: converting the sequence of symbols to a signal matched to a transmission channel between the transmitting device and a receiving device; and transmitting the signal to the receiving device.

A second aspect of the present disclosure provides a signal format for a transmitting device, wherein the signal format is based on: a punctured N-dimensional symbol constellation, wherein N is a positive integer larger than 1, wherein the punctured N-dimensional symbol constellation is a full N-dimensional symbol constellation minus an exclusion set, wherein the exclusion set is a subset of symbols of the N-dimensional symbol constellation, wherein the full N-dimensional symbol constellation is a Cartesian product of N identical 1-dimensional symbol constellations.

In an implementation form of the second aspect, each symbol in the punctured N-dimensional symbol constellation has a label which is an N-tuple composed of N 1-dimensional bit labels.

In an implementation form of the second aspect, the Cartesian product is an N-dimensional Cartesian product determined from a Gray-labelled or Quasi-Gray-labelled 1-dimensional $2^M$ symbol constellation, and $2^M$ denotes a number of constellation symbols of the Gray-labelled or Quasi-Gray-labelled 1-dimensional $2^M$ symbol constellation.

In an implementation form of the second aspect, each of the N identical 1-dimensional symbol constellations consists of a number of Gray-mapped or Quasi-Gray-mapped symbols, particularly $2^M$ Gray-mapped or Quasi-Gray-mapped symbols.

In an implementation form of the second aspect, the exclusion set comprises the symbols of the full N-dimensional symbol constellation with the highest bit error probability given a determined demapping strategy.

In an implementation form of the second aspect, the bit label is a Gray or Quasi-Gray bit label and the determined demapping strategy is bitwise.

In an implementation form of the second aspect, the determined demapping strategy is bitwise, and is followed by post-processing accounting for one or more N-dimensional constraints.

In an implementation form of the second aspect, the exclusion set is determined by minimizing a bit error probability under a 1-dimensional peak power constraint on the punctured N-dimensional symbol constellation.

In an implementation form of the second aspect, the full N-dimensional symbol constellation is a square shaped 2-dimensional symbol constellation; and the exclusion set comprises one or more inner symbols of the 2-dimensional symbol constellation.

In an implementation form of the second aspect, the punctured N-dimensional symbol constellation is a 2-dimensional symbol constellation comprising 32 constellation symbols; the full N-dimensional symbol constellation is a 2-dimensional symbol constellation comprising 36 constellation symbols; and the exclusion set comprises four inner symbols of the 2-dimensional symbol constellation.

The signal format of the second aspect allows achieving the advantages and effects described above for the transmitting device of the first aspect.

A third aspect of the present disclosure provides a method for transmitting a message, the method comprising:

generating a full N-dimensional symbol constellation, the full N-dimensional symbol constellation being a Cartesian product of N identical 1-dimensional symbol constellations, wherein N is a positive integer larger than 1; generating a punctured N-dimensional symbol constellation by excluding an exclusion set from the full N-dimensional symbol constellation wherein the exclusion set is a subset of symbols of the N-dimensional symbol constellation; and generating a sequence of symbols by mapping the message onto the punctured N-dimensional symbol constellation.

In an implementation form of the third aspect, each symbol in the punctured N-dimensional symbol constellation has a label which is an N-tuple composed of N 1-dimensional bit labels.

In an implementation form of the third aspect, the method further comprises: generating the punctured N-dimensional symbol constellation by excluding the exclusion set from the full N-dimensional symbol constellation based on one or more N-dimensional constraints.

In an implementation form of the third aspect, the one or more N-dimensional constraints are equations involving one or more or all of the bit labels of the symbols in the punctured N-dimensional symbol constellation.

In an implementation form of the third aspect, the bits of the message are pre-processed and mapped to the punctured N-dimensional symbol constellation, such that the one or more N-dimensional constraints are fulfilled.

In an implementation form of the third aspect, the Cartesian product is an N-dimensional Cartesian product determined from a Gray-labelled or Quasi-Gray-labelled 1-dimensional $2^M$ symbol constellation, and $2^M$ denotes a number of constellation symbols of the Gray-labelled or Quasi-Gray-labelled 1-dimensional $2^M$ symbol constellation.

In an implementation form of the third aspect, each of the N identical 1-dimensional symbol constellations consists of a number of Gray-mapped or Quasi-Gray-mapped symbols, particularly $2^M$ Gray-mapped or Quasi-Gray-mapped symbols.

In an implementation form of the third aspect, the exclusion set comprises the symbols of the full N-dimensional symbol constellation with the highest bit error probability given a determined demapping strategy.

In an implementation form of the third aspect, the bit label is a Gray or Quasi-Gray bit label and the determined demapping strategy is bitwise.

In an implementation form of the third aspect, the determined demapping strategy is bitwise, and is followed by post-processing accounting for one or more N-dimensional constraints.

In an implementation form of the third aspect, the exclusion set is determined by minimizing a bit error probability under a 1-dimensional peak power constraint on the punctured N-dimensional symbol constellation.

In an implementation form of the third aspect, the symbols are transmitted over an un-amplified optical fiber link.

In an implementation form of the third aspect, the full N-dimensional symbol constellation is a square shaped 2-dimensional symbol constellation; and the exclusion set comprises one or more inner symbols of the 2-dimensional symbol constellation.

In an implementation form of the third aspect, the punctured N-dimensional symbol constellation is a 2-dimensional symbol constellation comprising 32 constellation symbols; the full N-dimensional symbol constellation is a 2-dimensional symbol constellation comprising 36 constellation symbols; and the exclusion set comprises four inner symbols of the 2-dimensional symbol constellation.

In an implementation form of the third aspect, transmitting the sequence of symbols comprises: converting the sequence of symbols to a signal matched to a transmission channel between the transmitting device and a receiving device; and transmitting the signal to the receiving device.

The method of the third aspect achieves the advantages and effects described above for the transmitting device of the first aspect.

A fourth aspect of the present disclosure provides a computer program comprising a program code for performing, when running on a computer, the method according to the third aspect or any implementation form thereof.

A fifth aspect of the present disclosure provides a non-transitory storage medium storing executable program code which, when executed by a processor, causes the method according to the third aspect or any of its implementation forms to be performed.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms (embodiments of the invention) will be explained in the following description of specific embodiments in relation to the enclosed drawings, in which

FIG. 1    shows an example of a coherent optical transmitter.

FIG. 2    shows an example of an un-amplified optical fiber link.

FIG. 3    shows an example of a cross 32QAM (a) and a cross 128QAM (b) symbol constellations.

FIG. 4    shows a transmitting device according to an embodiment of the invention, using a punctured N-dimensional symbol constellation.

FIG. 5    shows, as an example, a punctured 2-dimensional symbol constellation that can be used by a transmitting device according to an embodiment of the invention.

FIG. 6    shows a performance of the punctured 2-dimensional symbol constellation of FIG. 5 over the Additive White Gaussian Noise (AWGN) channel.

FIG. 7    shows a factor graph of a constraint between one-dimensional partial labels of the punctured 2-dimensional symbol constellation of FIG. 5.

FIG. 8    shows a method for transmitting a message according to an embodiment of the invention.

DETAILED DESCRIPTION OF EMBODIMENTS

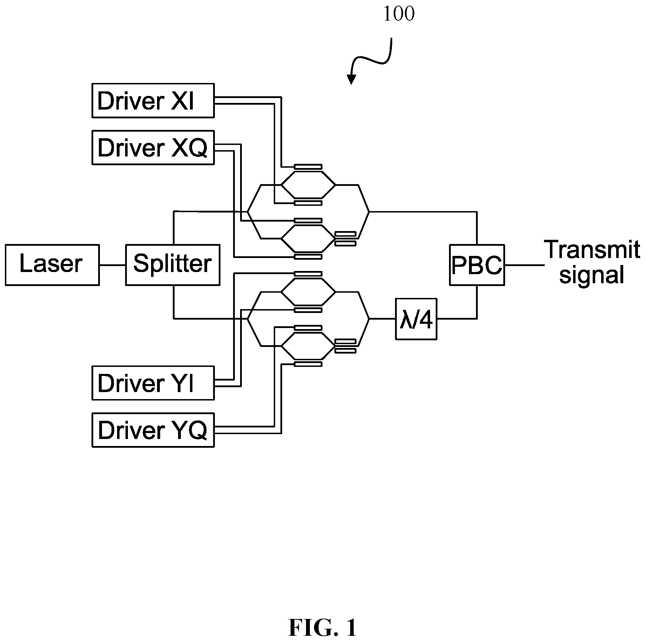

As illustrated in FIG. 1, in an exemplary coherent optical transmitter 100 the power of the transmit laser is equally split between two orthogonal polarization planes X and Y, and each polarization plane is equally split between the I and Q components. Each tributary (XI, XQ, YI, YQ) is modulated via a Mach-Zehnder modulator (MZM) that "carves" the desired signal shape by attenuating the laser. Therefore, the maximum power per dimension is limited. Further, the laser emits constantly the maximum power in this type of transmitters, and the modulation is achieved by dissipating the power in excess. Therefore, the cost in terms of power efficiency and thermal dissipation is determined by the peak power rather than the average power.

In general, the available transmit power is directly related to the maximum link budget. In some applications, the power of the two-dimensional signal can be enhanced along the link by using inline repeaters, i.e. amplifiers. However, this requires additional components and deteriorates the signal-to-noise ratio of the signal.

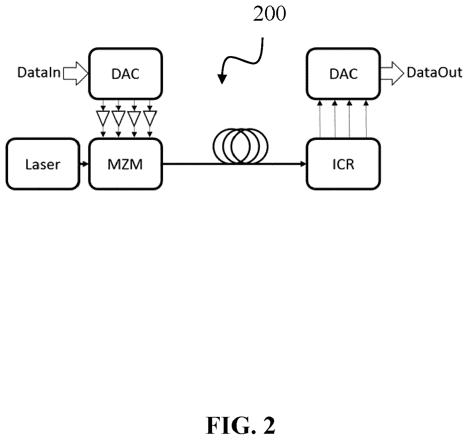

FIG. 2 shows an example of an un-amplified optical fiber link 200, i.e., a link without optical amplifiers arranged between the transmitter and receiver, whereby an MZM modulates the emitted laser light and an integrated coherent receiver (ICR) maps the light impinging at the receiver into electrical signals. A digital-to-analog converter (DAC) and an analog-to-digital converter (ADC) are used at transmitter and receiver, respectively, to interface the analog and the digital domains, and enable digital signal processing (DSP). Un-amplified links require high transmitter optical power to increase link budget and performance. Un-amplified links with a large link budget are common in Datacom and short-reach Telecom applications. For instance, within the 400ZR project, an objective is to define a 40km (ER) unamplified application code. Also, it is expected that a new proposal will be soon necessary for the upcoming 800ZR systems as well.

For a given transmitter, e.g. the coherent optical transmitter 100, with a given peak power, the choice of the symbol constellation affects the average transmit power. Therefore, it is the objective to identify symbol constellations that maximize the average transmit power without compromising the noise sensitivity of the system.

The Table 1 below provides an overview of power constraints and SNR definitions relevant for constellation design.

**Table 1**

| | |
|---|---|
| 2D average power | $P_{avg,2D}E[\|I + j \cdot Q\|^2]$ |
| 2D peak power | $P_{max,2D} = \max\{\|I + j \cdot Q\|^2\}$ |
| 1D peak power | $P_{max,1D} = \max\{\|I\|^2, \|Q\|^2\}$ |
| 2D average SNR | $SNR = \dfrac{P_{avg,2D}}{2\sigma^2}$ |

(continued)

| 2D peak SNR | $\mathrm{p2SNR} = \dfrac{P_{\max,2D}}{2\sigma^2}$ |
|---|---|
| 1D peak SNR | $\mathrm{p1SNR} = \dfrac{P_{\max,1D}}{\sigma^2}$ |
| $j = \sqrt{-1}$ is an imaginary number. | |

It can be observed that peak-power limited communication poses different boundary conditions than classical communication under average power constraints, and therefore undergoes different theoretical bounds.

In case of the widely used average power constraint, the maximum spectral efficiency (capacity) amounts to

$$\log_2(1 + \mathrm{SNR}) \qquad (1)$$

bits per complex dimension. Under the 1D peak power constraint, the capacity upper bound is

$$2 \cdot \log_2\left(1 + \sqrt{\tfrac{2 \cdot \mathrm{p1SNR}}{\pi \cdot e}}\right) \qquad (2)$$

per complex dimension, as stated in Andrew L. McKellips, "Simple Tight Bounds on Capacity for the Peak-Limited Discrete-Time Channel" published in the proceedings of the IEEE Int. Symp. Inf. Theory, 2004.

The considered constellation design problem consists in choosing a beneficial combination of constellation geometry (constellation symbol position) and, optionally, binary mapping so that:

- Demapping has low complexity,
- A binary FEC engine can be used (BICM), and
- A good performance is achieved under a 1D peak power constraint.

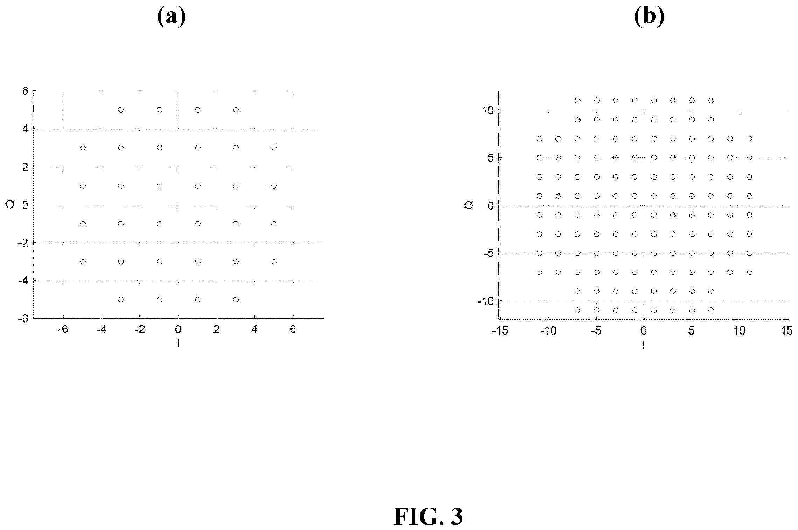

2-dimensional constellations are used in quadrature amplitude modulation (QAM) schemes. Many QAM constellations have been proposed. For $n = 2 \cdot m$, square constellations of $2^m \times 2^m$ points, as e.g. 16QAM, 64QAM, 256QAM, are the usual choice. For $n = 2 \cdot m + 1$, cross constellations, e.g. cross 32QAM and cross 128QAM, are the most common choices. FIG. 3 illustrates examples of the cross 32QAM and cross 128QAM symbol constellations. Cross-constellations do not use the corner points and therefore have a reduced peak-to-average power ratio (PAPR) in two dimensions.

In another example, the digital video broadcasting - satellite 2nd generation (DVB-S2) system uses constellations of points distributed along concentric rings. These constellations have a lower PAPR in two dimensions than cross constellations.

Unfortunately, known $2^n$-symbol constellations (including the above described examples, where $n = 2 \cdot m + 1$) are optimized with respect to the noise sensitivity regardless of the PAPR or with respect to the PAPR in two dimensions. The PAPR in one dimension (PAPR-1D) has not been taken into account so far.

Embodiments of the invention therefore employ a class of punctured N-dimensional symbol constellations.

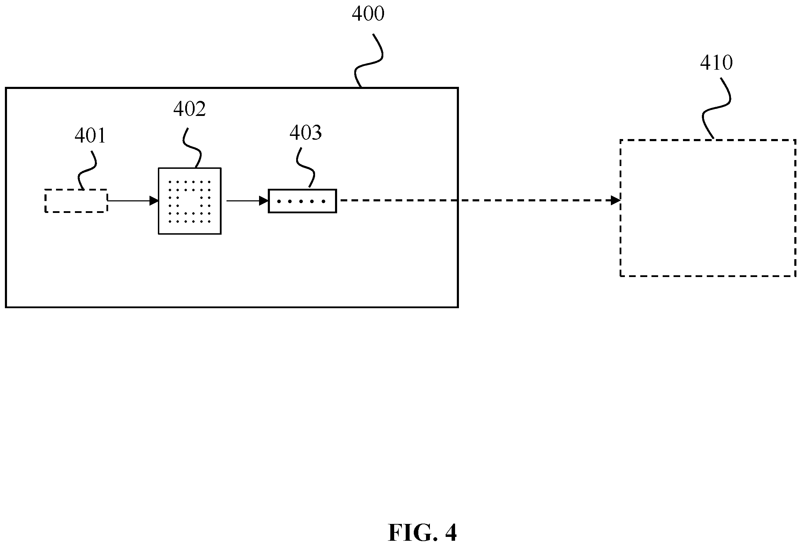

FIG. 4 shows in this respect a transmitting device 400 according to an embodiment of the invention. The transmitting device 400 may be, or may be included in, an optical transmitter, for example, the coherent optical transmitter 100 as shown in FIG. 1. The device 400 may compute driving signals for the optical transmitter 100. The transmitting device 400, or the optical transmitter comprising the transmitting device 400, may transmit over an un-amplified optical fiber link 200, for example, as shown in FIG. 2

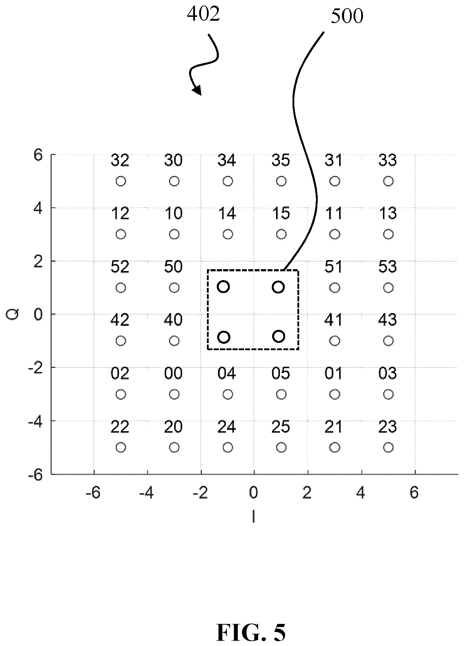

The transmitting device 400 is configured to generate a sequence of symbols 403 and transmit the sequence of symbols 403, e.g., to a receiving device 410. The transmitting device 400 generates the sequence of symbols 403 by mapping a message 401 (e.g. obtained or generated by the device 400) onto a punctured N-dimensional symbol constellation 402, wherein N is a positive integer larger than 1 (i.e. equal to or larger than 2). The punctured N-dimensional symbol constellation 402 may be one of a class of punctured N-dimensional symbol constellations. An example of the punctured N-dimensional symbol constellation is shown in FIG. 5. The example is, in particular, a 32QAM 2-dimensional symbol constellation with a bit mapping shown on an octal notation. Notably, the label in octal notation shown exemplarily in FIG 5 is a 6-bit label, however, only $2^5$=32 constellation symbols are selected. Thus, a preprocessing of the message 401 from 5 unconstrained message bits to 6 constrained message bits may be performed.

The punctured N-dimensional symbol constellation 402 is a full N-dimensional symbol constellation minus an exclusion set 500, wherein the exclusion set 500 is a subset of symbols of the full N-dimensional symbol constellation. That is, the constellation symbols included in the exclusion set, are included in the full N-dimensional symbol constellation, but not in the punctured N-dimensional symbol constellation. Thereby, the full N-dimensional symbol constellation is a Cartesian product of N identical 1-dimensional symbol constellations. As mentioned above, for the example of the 32QAM 2-dimensional symbol constellation shown in FIG. 5, a 1D bit-label for 6 constellation symbols may be obtained by taking a 1D bit-label for 8 constellation symbols and then excluding the 2 outer constellation symbols.

The following may generally describe an approach that may be used for designing the punctured N-dimensional symbol constellation 402 used by the transmitting device 400:

1. Start with a Gray-labelled 1D $2^m$ symbol constellation and take its N-dimensional Cartesian product.
2. Define constraints on the $m \cdot N$ bit label, to select a subset of M symbols with desirable properties, for example:

    a. Low complexity demapping.
    b. The system operates at the desired spectral efficiency.
    c. BICM has good performance.

The spectral efficiency of the symbol constellations under this construction may be, without FEC,

$$2 \cdot \frac{\log_2 M}{N} \qquad (3)$$

bits per complex dimension. With BICM, using a binary rate $R_{\text{FEC}}$ FEC code, the spectral efficiency may be

$$2 \cdot \frac{\log_2 M}{N} - 2 \cdot m(1 - R_{\text{FEC}}) \quad (4)$$

bits per complex dimension. As can be seen, the spectral efficiency can be controlled by the number $M$ of symbols that are permitted by the constraint.

In particular, the following specific procedure may be used for designing the punctured N-dimensional symbol constellation 402 used by the transmitting device 400:

It is supposed that for two integers $p$, $N$ a target rate before coding is

$$\frac{p}{N}$$

bits per real dimension. The (final) punctured symbol constellation 402 is N-dimensional and has M = $2^p$ constellation symbols. It can be constructed as follows:

1. For

$$m = \text{ceil}(\frac{p}{N})$$

a Gray-mapped $2^m$-ASK 1D constellation may be used as an initial symbol constellation. The $N$-fold Cartesian product of the Gray-mapping is the $mN$-bit Gray-mapping of the final punctured symbol constellation 402. For example, m=3, accordingly, 8 constellation symbols in 1D.
2. For

$$q = \text{ceil}(M^{1/N})$$

q successive symbols of the $2^m$-ASK symbol constellation may be used as a 1D base constellation. For example, q=6, i.e. 6 constellation symbols in 1D are selected.

3. The *N*-fold Cartesian product of this 1D base constellation may be used as the full N-dimensional symbol constellation introduced above. For example, the full symbol constellation may have 36 constellation symbols (for m=3, and q=6).

4. Then, $M = 2^p$ constellation symbols may be selected from the full N-dimensional symbol constellation, according to some criterion, to obtain the punctured N-dimensional symbol constellation 402. For example, M=32 (for m=3, q=6). Selecting the *M* constellation symbols may comprise selecting the exclusion set 500. An example criterion is used in the following algorithm:

- Repeat ($q^N$ - $2^p$) times:

    - Compute (or estimate by simulation) the symbol error probability of remaining symbol.
    - Remove one of the symbols with the highest symbol error probability.

5. The labels that the *mN*-bit Gray-mapping assigns to the exclusion set 500 (i.e., the set of symbols of the full N-dimensional symbol constellation removed for obtaining the constellation symbols of the punctured symbol constellation 402) translate into an *N*-dimensional constraint on the permitted labels, which is exploited for low complexity demapping.

In the particular example shown in FIG. 5, the punctured N-dimensional symbol constellation 402 is a square-shaped 2-dimensional symbol constellation, and the exclusion set 500 comprises one or more inner constellation symbols (particularly central symbols) of the 2-dimensional symbol constellation. Thus, the punctured symbol constellation 402 may also be referred to as a "Donut" symbol constellation. In particular, in the example of FIG. 5, the full N-dimensional symbol constellation is a 2-dimensional symbol constellation comprising 36 constellation symbols, and the exclusion set 500 comprises four inner constellation symbols of the 2-dimensional symbol constellation.

The following describes how the above procedure can be used to construct the punctured 2-dimensional symbol constellation 402 shown in FIG. 5, with 32 constellation symbols, which is also referred to as "Donut-32QAM" in this disclosure.

The target rate before coding is:

$$\frac{p}{N} = \frac{5}{2} = 2.5$$

bits per real dimension. Further, the final punctured symbol constellation 402 is $N = 2$ dimensional, and has $M = 2^p = 32$ constellation symbols.

1. Since $m = \text{ceil}\left(\frac{p}{N}\right) = 3$, the start is a Gray-mapped 1D $2^m = 8$ -ASK initial constellation.

2. Since

$$q = \text{ceil}\left(M^{\frac{1}{N}}\right) = \text{ceil}\left(\sqrt{32}\right) = 6$$

the 8-ASK initial constellation is truncated by removing the two outer constellation symbols, to obtain the 1D base constellation with 6 constellation symbols. The 1D Gray-mapping is shown in the below Table 2, and the 2D Gray-mapping obtained by taking the Cartesian product is shown in FIG. 5.

3. Now the 2-fold Cartesian product of the 1D base constellation is taken. The resulting full 2-dimensional symbol constellation is a Gray-mapped 36-QAM.

4. Then, $q^N$ - $2^p$ = $6^2$ - $2^5$ = 36 - 32 = 4 inner constellation symbols are removed.

5. According to FIG. 5 (and see also the below Table 2), the removed constellation symbols correspond to the exemplary 2D constraint Labels "_1_1" are forbidden.

The "Donut-32QAM" shown in FIG. 5 can be regarded as a complementary solution to a "cross-32QAM" symbol constellation. Whereas in a cross-32QAM the corner constellation symbols are removed, to reduce the PAPR in two-dimensions, the Donut-32QAM is constructed by removing the center constellation symbols, because a 1D PAPR constraint instead of a 2D PAPR constraint is considered. Since the corner constellation symbols of the Donut-32QAM have fewer neighbors than the center constellation symbols of the cross-32QAM, a better detection is achieved under the considered peak power constraint.

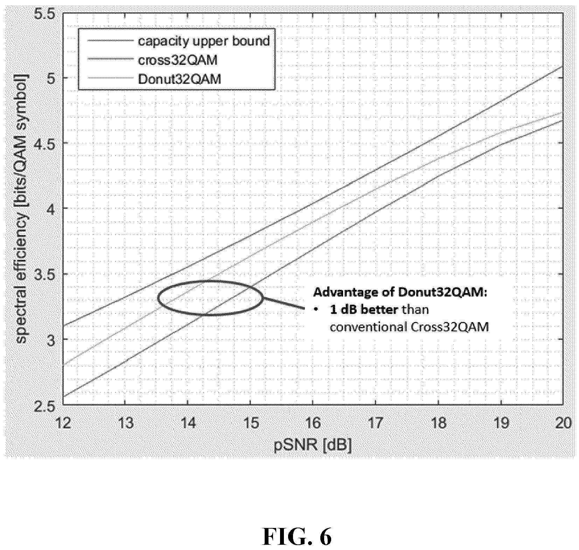

FIG. 6 compares the Donut-32QAM and the cross-32QAM in terms of spectral efficiency (SE) vs. p1SNR in the presence of Additive White Gaussian Noise (AWGN). The improvement of the Donut-32QAM over the cross-32QAM can be readily observed.

In the following, it is described how demapping of the Donut-32QAM can be implemented efficiently. A 32-point symbol constellation does not admit a Gray bit-mapping with 5 bits per symbol. However, use is made of a redundant Gray mapping with 6 bits per symbol, following Joel G. Smith "Odd-Bit Quadrature Amplitude-Shift Keying", in IEEE Trans. Comm., pp 385-389, March 1975. In particular, the construction according to embodiments of the invention with the exclusion set and the punctured N-dimensional symbol constellation 402 results automatically in this redundant bit mapping.

To this end, the one-dimensional $C$ component ($C \in \{I, Q\}$) is considered, and the projected constellation is defined as

$$X = \{-5, -3, -1, 1, 3, 5\} \tag{5}$$

The I and Q components of the donut 32QAM symbol constellation are separately Gray-labeled according to the following Table 2:

**Table 2**

| $C$ | Binary label | | |
|---|---|---|---|
| $\in \{I, Q\}$ | $b_{C,0}$ | $b_{C,1}$ | $b_{C,2}$ |
| -5 | 0 | 1 | 0 |
| -3 | 0 | 0 | 0 |
| -1 | 0 | 0 | 1 |
| 1 | 1 | 0 | 1 |
| 3 | 1 | 0 | 0 |
| 5 | 1 | 1 | 0 |

The binary label of the 2-dimensional constellation symbols is defined as

$$\mathbf{b} = \begin{pmatrix} b_{I,0} & b_{I,1} & b_{I,2} & b_{Q,0} & b_{Q,1} & b_{Q,2} \end{pmatrix} \tag{6}$$

Only 32 out of the 64 possible 6-bit binary strings are used to label the Donut-32QAM symbol constellation.

Although the bit mapping is decomposable over the I and Q components, the symbol constellation is not the direct product of its one-dimensional projections. Therefore, the optimum de-mapper operates jointly in two dimensions.

In the following, it is assumed that the constellation symbols are independent and identically distributed, and that the channel merely injects AWGN. For this scenario, a procedure is described to compute the log-likelihood ratios (LLRs), which relies upon the following two steps:

1. Separate the computation of the LLRs for the I and Q projections of the received symbol.
2. Joint post-processing of the LLRs to take the mutual constraints into account.

The approach can be generalized to other memory-less channels.

The *a posteriori* LLR of the *i*-th bit of the C component is defined as

$$L_i(y) = \log\left(\frac{\Pr(b_i = 0|y)}{\Pr(b_i = 1|y)}\right) \qquad (7)$$

wherein y is a one dimensional projection on C of a two-dimensional received noisy symbol and $i \in \{(C, 0), (C, 1), (C, 2)\}$ identifies a position in the bit mapping according to the above Table 2.

The computation of the 1D LLRs for the I and Q projections can be performed using the transitions probabilities $\Pr_{ch}(y|x)$ of the channel

$$L_i(y) = \log\left(\frac{\sum_{x \in X(b_i=0)} \Pr_{ch}(y|x)}{\sum_{x \in X(b_i=1)} \Pr_{ch}(y|x)}\right) \qquad (8)$$

wherein $X(b_i = 0)$ and $X(b_i = 1)$ denote the sub-constellations of X, which contain only points whose $i$-th bit is 0 or 1, respectively. Note that, due to the redundant mapping, the two sub-constellations $X(b_i = 0)$ and $X(b_i = 1)$ can have different cardinality.

If the noisy projection y is approximated using a finite-precision representation, eq. (8) can be implemented by means of a look-up table (LUT). Under the AWGN assumption an alternative low-complexity implementation is obtained via the max-log approximation (MLA)

$$L_i(y) \approx \frac{1}{N_0}\left[\min_{x \in X(b_i=1)}\left(|y - x|^2\right) - \min_{x \in X(b_i=0)}\left(|y - x|^2\right)\right] \qquad (9)$$

wherein $N_0$ is the variance of the complex AWGN samples.

The additional constraint between the I and Q components of the Donut-32QAM constellation is determined by the presence of the central "hole". At most one of the two quadrature components can take the value 1 for any given constellation symbol. According to the mapping of the table above, this constraint can be expressed as

$$b_{I,2} \cdot b_{Q,2} = 0 \qquad (10)$$

Given two valid one-dimensional bit labels

$$\mathbf{b}_I = \begin{pmatrix} b_{I,0} & b_{I,1} & b_{I,2} \end{pmatrix} \qquad (11)$$

$$\mathbf{b}_Q = \begin{pmatrix} b_{Q,0} & b_{Q,1} & b_{Q,2} \end{pmatrix} \qquad (12)$$

the validity of the juxtaposed label

$$\mathbf{b} = \begin{pmatrix} \mathbf{b}_I & \mathbf{b}_Q \end{pmatrix} \qquad (13)$$

is determined by the indicator function

$$\chi(b_{I,2}, b_{Q,2}) = \begin{cases} 1 & \text{if } b_{I,2} \cdot b_{Q,2} = 0 \\ 0 & \text{if } b_{I,2} \cdot b_{Q,2} = 1 \end{cases} \qquad (14)$$

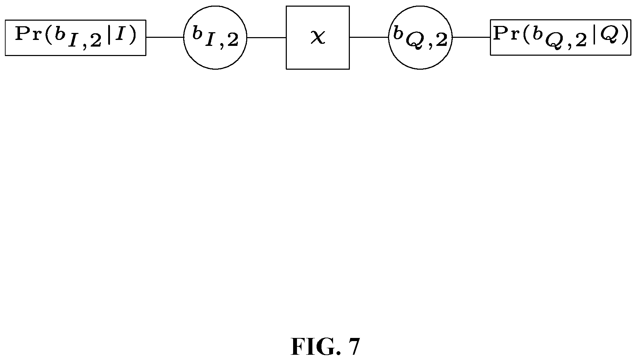

FIG. 7 shows a factor graph of the constraint between the one-dimensional partial labels of the Donut-32QAM constellation. In particular, the constraint between $b_{I,2}$ and $b_{Q,2}$ can be represented by means of the factor graph.

According to the sum-product algorithm, the messages $\mu$ exchanged between the nodes of the factor graph are real functions over the domain {0,1}, which can be represented as pairs of real values. In detail, the result is

$$\mu\left[b_{I,2} \to \chi\right] = \mu\left[\Pr\left(b_{I,2}|I\right) \to b_{I,2}\right] = \left[\Pr\left(b_{I,2} = 0|I\right), \Pr\left(b_{I,2} = 1|I\right)\right] \quad (1)$$

$$\mu\left[b_{Q,2} \to \chi\right] = \mu\left[\Pr\left(b_{Q,2}|Q\right) \to b_{Q,2}\right] = \left[\Pr\left(b_{Q,2} = 0|Q\right), \Pr\left(b_{Q,2} = 1|Q\right)\right] \quad (2)$$

$$\mu\left[\chi \to b_{I,2}\right] = \left[1, \Pr\left(b_{Q,2} = 0|Q\right)\right] \quad (3)$$

$$\mu\left[\chi \to b_{Q,2}\right] = \left[1, \Pr\left(b_{I,2} = 0|Q\right)\right] \quad (4)$$

Upon termination of the sum-product algorithm, the estimated distributions of $b_{I,2}$ and $b_{Q,2}$ are computed (up to a normalization factor) as the product of the messages impinging on the corresponding nodes:

$$\Pr\left(b_{I,2}\right) \propto \left[\Pr\left(b_{I,2} = 0|I\right), \Pr\left(b_{I,2} = 1|I\right) \cdot \Pr\left(b_{Q,2} = 0|Q\right)\right] \quad (5)$$

$$\Pr\left(b_{Q,2}\right) \propto \left[\Pr\left(b_{Q,2} = 0|Q\right), \Pr\left(b_{Q,2} = 1|Q\right) \cdot \Pr\left(b_{I,2} = 0|I\right)\right] \quad (6)$$

Using eq. (7) and the resulting relations

$$\Pr(b_i = 0|y) = \frac{e^{L_i(y)}}{1 + e^{L_i(y)}} \quad (21)$$

and

$$\Pr(b_i = 1|y) = \frac{1}{1 + e^{L_i(y)}} \quad (22)$$

the estimated distribution can be expressed in terms of LLRs

$$\hat{L}_{I,2}(I,Q) = L_{I,2}(I) + \log\left(\frac{1 + e^{L_{Q,2}(Q)}}{e^{L_{Q,2}(Q)}}\right) \quad (23)$$

and

$$\hat{L}_{Q,2}(I,Q) = L_{Q,2}(Q) + \log\left(\frac{1 + e^{L_{I,2}(I)}}{e^{L_{I,2}(I)}}\right) \quad (24)$$

By means of the MLA, eq. (23) and eq. (24) can be approximated as

$$\hat{L}_{I,2}(I,Q) \approx \max\left(L_{I,2}(I), L_{I,2}(I) - L_{Q,2}(Q)\right) \tag{7}$$

$$\hat{L}_{Q,2}(I,Q) \approx \max\left(L_{Q,2}(Q), L_{Q,2}(Q) - L_{I,2}(I)\right) \tag{26}$$

The LLRs of the remaining bits are not affected by the post-processing step

$$\hat{L}_{C,k}(I,Q) = L_{C,k}(C) \quad \text{for } C \in \{I,Q\}, k \in \{0,1\} \tag{27}$$

In summary, the algorithm for the computation of the LLRs of the Donut-32QAM constellation consists of the following two steps:

1. Compute the LLRs $L_i$ of the I and Q projections according to eq. (8) or eq. (9).
2. Obtain the final estimates $\hat{L}_i$ of the a posteriori LLRs for the two-dimensional constellation by eqs. (23)- (24) or eqs. (7)-(26) and the trivial eq. (27).

In the following, another example for the punctured N-dimensional symbol constellation 402 is described. In particular, the above construction is now also described for $N = 3$ dimensions. The target rate before coding is

$$\frac{p}{N} = \frac{7}{3} = 2.33$$

bits per real dimension. The final punctured symbol constellation 402 is three dimensional and contains $2^7 = 128$ signal points.

1. Since

$$m = \text{ceil}\left(\frac{p}{N}\right) = 3$$

the start is a Gray-mapped 1D $2^m = 8$ -ASK initial constellation.
2. Since

$$q = \text{ceil}\left(M^{\frac{1}{N}}\right) = \text{ceil}\left(128^{\frac{1}{3}}\right) = 6$$

the 8-ASK constellation is truncated by removing the two outer constellation symbols to obtain a 1D base constellation with 6 constellation symbols. The 1D Gray-mapping is shown in the above table, and the 3D Gray-mapping is obtained by taking the Cartesian product.
3. Now the 3-fold Cartesian product of the 1D base constellation is taken. The resulting full 2-dimensional symbol constellation mentioned above is a 3D Gray-mapped 216-QAM.
4. Then, $q^N$ - $2^p$ = $6^3$ - $2^7$ = 216 - 128 = 88 3D constellation symbols are removed according to some criterion, e.g., a highest symbol error probability.
5. The label of the removed constellation symbols translates into a 3-dimensional label constraint, which can be exploited for low complexity demapping.

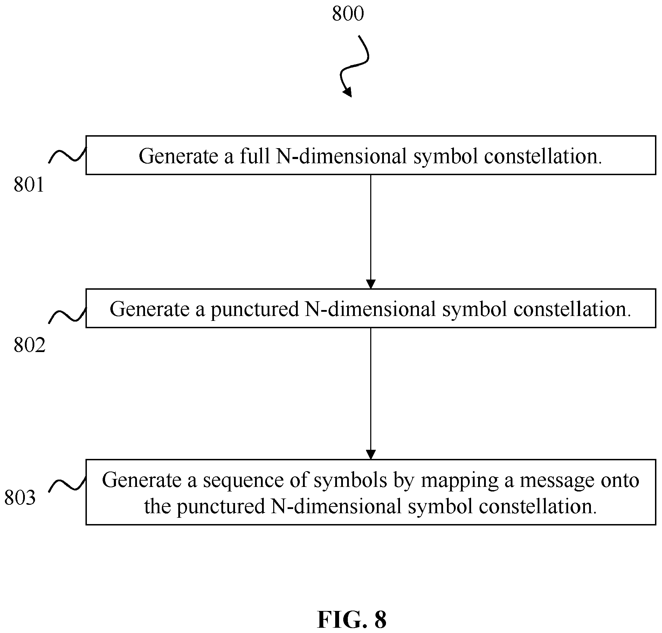

FIG. 8 shows a method 800 for transmitting a message 401 according to an embodiment of the invention. The method 800 may be performed by the transmitting device 400 shown in FIG. 4, and the message 401 may be transmitted to a receiving device 410. The method 800 may also be performed only in parts by the transmitting device 400.
The method 800 comprises a step 801 of generating a full N-dimensional symbol constellation, the full N-dimensional symbol constellation being a Cartesian product of N identical 1-dimensional symbol constellations, wherein N is greater than or equal to 2. Step 801 may be a precomputation step, and is in this case not performed by the transmitting device 400. Further, the method 800 comprises a step 802 of generating a punctured N-dimensional symbol constellation 402 by excluding an exclusion set 500 from the full N-dimensional symbol constellation, wherein the exclusion set 500 is a subset of symbols of the N-dimensional symbol constellation. Also step 802 may be a precomputation step, and is in this case not performed by the transmitting device 400. Further, the method 800 comprises a step 803 of generating a sequence of symbols 403 by mapping the message 401 onto the punctured N-dimensional symbol constellation 402.

The present disclosure has been described in conjunction with various embodiments as examples as well as implementations of the invention. However, other variations can be understood and effected by those persons skilled in the art and practicing the claimed embodiments of the invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1.  A transmitting device (400) configured to:

    generate a sequence of symbols (403) by mapping a message (401) onto a punctured N-dimensional symbol constellation (402), wherein N is a positive integer larger than 1,
    wherein the punctured N-dimensional symbol constellation (402) is a full N-dimensional symbol constellation minus an exclusion set (500), wherein the exclusion set (500) is a subset of symbols of the full N-dimensional symbol constellation, wherein the exclusion set (500) is determined by minimizing a bit error probability under a 1-dimensional peak power constraint on the punctured N-dimensional symbol constellation (402), wherein the full N-dimensional symbol constellation is a Cartesian product of N identical 1-dimensional symbol constellations; and
    transmit the sequence of symbols (403).

2.  The transmitting device (400) according to claim 1, wherein:
    each symbol in the punctured N-dimensional symbol constellation (402) has a label which is an N-tuple composed of N 1-dimensional bit labels.

3.  The transmitting device (400) according to claim 1 or 2, configured to:
    generate the punctured N-dimensional symbol constellation (402) by excluding the exclusion set (500) from the full N-dimensional symbol constellation based on one or more N-dimensional constraints.

4.  The transmitting device (400) according to claim 3, wherein:
    the one or more N-dimensional constraints are equations involving one or more or all of the bit labels of the symbols in the punctured N-dimensional symbol constellation (402).

5.  The transmitting device (400) according to claim 3 or 4, wherein:
    the bits of the message are pre-processed and mapped to the punctured N-dimensional symbol constellation (402), such that the one or more N-dimensional constraints are fulfilled.

6.  The transmitting device (400) according to one of the claims 1 to 5, wherein:
    the Cartesian product is an N-dimensional Cartesian product determined from a Gray-labelled or Quasi-Gray-labelled 1-dimensional $2^M$ symbol constellation, and $2^M$ denotes a number of constellation symbols of the Gray-labelled or Quasi-Gray-labelled 1-dimensional $2^M$ symbol constellation.

7.  The transmitting device (400) according to one of the claims 1 to 6, wherein:
    each of the N identical 1-dimensional symbol constellations consists of a number of Gray-mapped or Quasi-Gray-mapped symbols, particularly $2^M$ Gray-mapped or Quasi-Gray-mapped symbols

8.  The transmitting device (400) according to one of the claims 1 to 7, wherein:

the exclusion set (500) comprises the symbols of the full N-dimensional symbol constellation with the highest bit error probability given a determined demapping strategy.

9. The transmitting device (400) according to one of the claims 1 to 8, wherein:

   the punctured N-dimensional symbol constellation (402) is a 2-dimensional symbol constellation comprising 32 constellation symbols;
   the full N-dimensional symbol constellation is a 2-dimensional symbol constellation comprising 36 constellation symbols; and
   the exclusion set (500) comprises four inner symbols of the 2-dimensional symbol constellation.

10. The transmitting device (400) according to one of the claims 1 to 9, wherein transmitting the sequence of symbols (403) comprises:

   converting the sequence of symbols (403) to a signal matched to a transmission channel between the transmitting device (400) and a receiving device (410); and
   transmitting the signal to the receiving device (410).

11. A method (800) for transmitting a message (401), the method (800) comprising:

   generating (801) a full N-dimensional symbol constellation, the full N-dimensional symbol constellation being a Cartesian product of N identical 1-dimensional symbol constellations, wherein N is a positive integer larger than 1;
   generating (802) a punctured N-dimensional symbol constellation (402) by excluding an exclusion set (500) from the full N-dimensional symbol constellation, wherein the exclusion set (500) is a subset of symbols of the N-dimensional symbol constellation, wherein the exclusion set (500) is determined by minimizing a bit error probability under a 1-dimensional peak power constraint on the punctured N-dimensional symbol constellation (402);
   generating (803) a sequence of symbols (403) by mapping the message (401) onto the punctured N-dimensional symbol constellation (402); and
   transmitting the sequence of symbols (403).

12. A computer program comprising a program code for performing, when running on a computer, the method (800) according to claim 11.

**Patentansprüche**

1. Übertragungsvorrichtung (400), die für Folgendes konfiguriert ist:

   Erzeugen einer Sequenz von Symbolen (403) durch Zuordnen einer Nachricht (401) auf eine punktierte N-dimensionale Symbolkonstellation (402), wobei N eine positive ganze Zahl größer als 1 ist,
   wobei die punktierte N-dimensionale Symbolkonstellation (402) eine vollständige N-dimensionale Symbolkonstellation minus einem Ausschlusssatz (500) ist, wobei der Ausschlusssatz (500) eine Teilmenge von Symbolen der vollständigen N-dimensionalen Symbolkonstellation ist, wobei der Ausschlusssatz (500) durch Minimieren einer Bitfehlerwahrscheinlichkeit unter einer 1-dimensionalen Spitzenleistungseinschränkung auf der punktierten N-dimensionalen Symbolkonstellation (402) bestimmt wird, wobei die vollständige N-dimensionale Symbolkonstellation ein kartesisches Produkt von N identischen 1-dimensionalen Symbolkonstellationen ist; und
   Übertragen der Sequenz von Symbolen (403).

2. Übertragungsvorrichtung (400) gemäß Anspruch 1, wobei:
   jedes Symbol in der punktierten N-dimensionalen Symbolkonstellation (402) eine Beschriftung aufweist, die ein N-Tupel ist, das aus N 1-dimensionalen Bitbeschriftungen besteht.

3. Übertragungsvorrichtung (400) gemäß Anspruch 1 oder 2, die für Folgendes konfiguriert ist:
   Erzeugen der punktierten N-dimensionalen Symbolkonstellation (402) durch Ausschließen des Ausschlusssatzes (500) aus der vollständigen N-dimensionalen Symbolkonstellation basierend auf einer oder mehreren N-dimensionalen Einschränkungen.

**4.** Übertragungsvorrichtung (400) gemäß Anspruch 3, wobei:
die eine oder die mehreren N-dimensionalen Einschränkungen Gleichungen sind, die eine oder mehrere oder alle der Bitbeschriftungen der Symbole in der punktierten N-dimensionalen Symbolkonstellation (402) einbeziehen.

**5.** Übertragungsvorrichtung (400) gemäß Anspruch 3 oder 4, wobei:
die Bits der Nachricht vorverarbeitet und zu der punktierten N-dimensionalen Symbolkonstellation (402) derart zugeordnet werden, dass die eine oder die mehreren N-dimensionalen Einschränkungen erfüllt werden.

**6.** Übertragungsvorrichtung (400) gemäß einem der Ansprüche 1 bis 5, wobei:
das kartesische Produkt ein N-dimensionales kartesisches Produkt ist, das aus einer Gray-beschrifteten oder Quasi-Gray-beschrifteten 1-dimensionalen $2^M$-Symbolkonstellation bestimmt wird, und $2^M$ eine Anzahl von Konstellationssymbolen der Gray-beschrifteten oder Quasi-Gray-beschrifteten 1-dimensionalen $2^M$-Symbolkonstellation bezeichnet.

**7.** Übertragungsvorrichtung (400) gemäß einem der Ansprüche 1 bis 6, wobei:
jede der N identischen 1-dimensionalen Symbolkonstellationen aus einer Anzahl von Gray-zugeordneten oder Quasi-Gray-zugeordneten Symbolen, insbesondere $2^M$ Gray-zugeordneten oder Quasi-Gray-zugeordneten Symbolen besteht.

**8.** Übertragungsvorrichtung (400) gemäß einem der Ansprüche 1 bis 7, wobei:
der Ausschlusssatz (500) die Symbole der vollständigen N-dimensionalen Symbolkonstellation mit der höchsten Bitfehlerwahrscheinlichkeit bei einer bestimmten Entzuordnungsstrategie umfasst.

**9.** Übertragungsvorrichtung (400) gemäß einem der Ansprüche 1 bis 8, wobei:

die punktierte N-dimensionale Symbolkonstellation (402) eine 2-dimensionale Symbolkonstellation umfassend 32 Konstellationssymbole ist;
die vollständige N-dimensionale Symbolkonstellation eine 2-dimensionale Symbolkonstellation umfassend 36 Konstellationssymbole ist; und
der Ausschlusssatz (500) vier innere Symbole der 2-dimensionalen Symbolkonstellation umfasst.

**10.** Übertragungsvorrichtung (400) gemäß einem der Ansprüche 1 bis 9, wobei Übertragen der Sequenz von Symbolen (403) Folgendes umfasst:
Umwandeln der Sequenz von Symbolen (403) in ein Signal, das an einen Übertragungskanal zwischen der Übertragungsvorrichtung (400) und einer Empfangsvorrichtung (410) angepasst ist; und Übertragen des Signals an die Empfangsvorrichtung (410).

**11.** Verfahren (800) zum Übertragen einer Nachricht (401), wobei das Verfahren (800) Folgendes umfasst:

Erzeugen (801) einer vollständigen N-dimensionalen Symbolkonstellation, wobei die vollständige N-dimensionale Symbolkonstellation ein kartesisches Produkt von N identischen 1-dimensionalen Symbolkonstellationen ist, wobei N eine positive ganze Zahl größer als 1 ist;
Erzeugen (802) einer punktierten N-dimensionalen Symbolkonstellation (402) durch Ausschließen eines Ausschlusssatzes (500) aus der vollständigen N-dimensionalen Symbolkonstellation, wobei der Ausschlusssatz (500) eine Teilmenge von Symbolen der N-dimensionalen Symbolkonstellation ist, wobei der Ausschlusssatz (500) durch Minimieren einer Bitfehlerwahrscheinlichkeit unter einer 1-dimensionalen Spitzenleistungseinschränkung auf der punktierten N-dimensionalen Symbolkonstellation (402) bestimmt wird;
Erzeugen (803) einer Sequenz von Symbolen (403) durch Zuordnen der Nachricht (401) auf die punktierte N-dimensionale Symbolkonstellation (402); und
Übertragen der Sequenz von Symbolen (403).

**12.** Computerprogramm umfassend einen Programmcode zum Durchführen, beim Laufen auf einem Computer, des Verfahrens (800) gemäß Anspruch 11.

**Revendications**

**1.** Dispositif émetteur (400) configuré pour :

générer une séquence de symboles (403) en mappant un message (401) sur une constellation perforée de symboles à N dimensions (402), dans lequel N est un entier positif supérieur à 1,

dans lequel la constellation perforée de symboles à N dimensions (402) est une constellation complète de symboles à N dimensions moins un ensemble d'exclusion (500), dans lequel l'ensemble d'exclusion (500) est un sous-ensemble de symboles de la constellation complète de symboles à N dimensions, dans lequel l'ensemble d'exclusion (500) est déterminé par la réduction au mieux d'une probabilité d'erreur sur les bits sous une contrainte de puissance de crête unidimensionnelle sur la constellation perforée de symboles à N dimensions (402), dans lequel la constellation complète de symboles à N dimensions est un produit cartésien de N constellations de symboles unidimensionnels identiques ; et

transmettre la séquence de symboles (403).

2. Dispositif émetteur (400) selon la revendication 1, dans lequel :
chaque symbole dans la constellation perforée de symboles à N dimensions (402) possède une étiquette qui est un N-tuple composé de N étiquettes de bits unidimensionnels.

3. Dispositif émetteur (400) selon la revendication 1 ou 2, configuré pour :
générer la constellation perforée de symboles à N dimensions (402) en excluant l'ensemble d'exclusion (500) de la constellation complète de symboles à N dimensions sur la base d'une ou de plusieurs contraintes à N dimensions.

4. Dispositif émetteur (400) selon la revendication 3, dans lequel :
les une ou plusieurs contraintes à N dimensions sont des équations impliquant l'une ou plusieurs ou toutes les étiquettes de bits des symboles dans la constellation perforée de symboles à N dimensions (402).

5. Dispositif émetteur (400) selon la revendication 3 ou 4, dans lequel :
les bits du message sont prétraités et mappés sur la constellation perforée de symboles à N dimensions (402), de sorte que les une ou plusieurs contraintes à N dimensions sont remplies.

6. Dispositif émetteur (400) selon l'une des revendications 1 à 5, dans lequel :
le produit cartésien est un produit cartésien à N dimensions déterminé à partir d'une constellation de symboles $2^M$ unidimensionnels marqués en gris ou quasi-gris, et $2^M$ désigne un certain nombre de symboles de constellation de la constellation de symboles $2^M$ unidimensionnels marqués en gris ou quasi-gris.

7. Dispositif émetteur (400) selon l'une des revendications 1 à 6, dans lequel :
chacune des N constellations de symboles unidimensionnels identiques est constituée d'un certain nombre de symboles mappés en gris ou quasi-gris, en particulier $2^M$ symboles mappés en gris ou quasi-gris.

8. Dispositif émetteur (400) selon l'une des revendications 1 à 7, dans lequel :
l'ensemble d'exclusion (500) comprend les symboles de la constellation complète de symboles à N dimensions avec la probabilité d'erreur sur les bits la plus élevée compte tenu d'une stratégie de démappage déterminée.

9. Dispositif émetteur (400) selon l'une des revendications 1 à 8, dans lequel :

la constellation perforée de symboles à N dimensions (402) est une constellation de symboles bidimensionnels comprenant 32 symboles de constellation ;
la constellation complète de symboles à N dimensions est une constellation de symboles bidimensionnels comprenant 36 symboles de constellation ; et
l'ensemble d'exclusion (500) comprend quatre symboles internes de la constellation de symboles bidimensionnels.

10. Dispositif émetteur (400) selon l'une des revendications 1 à 9, dans lequel la transmission de la séquence de symboles (403) comprend :

la conversion de la séquence de symboles (403) en un signal adapté à un canal de transmission entre le dispositif émetteur (400) et un dispositif de réception (410) ; et
la transmission du signal au dispositif de réception (410).

11. Procédé (800) pour transmettre un message (401), le procédé (800) comprenant :

la génération (801) d'une constellation complète de symboles à N dimensions, la constellation complète de symboles à N dimensions étant un produit cartésien de N constellations de symboles unidimensionnels identiques, dans lequel N est un entier positif supérieur à 1 ;

la génération (802) d'une constellation perforée de symboles à N dimensions (402) en excluant un ensemble d'exclusion (500) de la constellation complète de symboles à N dimensions, dans lequel l'ensemble d'exclusion (500) est un sous-ensemble de symboles de la constellation de symboles à N dimensions, dans lequel l'ensemble d'exclusion (500) est déterminé par la réduction au mieux d'une probabilité d'erreur sur les bits sous une contrainte de puissance de crête unidimensionnelle sur la constellation perforée de symboles à N dimensions (402) ;

la génération (803) d'une séquence de symboles (403) par le mappage du message (401) sur la constellation perforée de symboles à N dimensions (402) ; et

la transmission de la séquence de symboles (403).

12. Programme informatique comprenant un code de programme pour exécuter, lors de son exécution sur un ordinateur, le procédé (800) selon la revendication 11.

FIG. 1

FIG. 2

EP 4 038 850 B1

(a)                                          (b)

**FIG. 3**

FIG. 4

EP 4 038 850 B1

**FIG. 5**

**FIG. 6**

$$\boxed{\mathrm{Pr}(b_{I,2}|I)} - \left(b_{I,2}\right) - \boxed{\chi} - \left(b_{Q,2}\right) - \boxed{\mathrm{Pr}(b_{Q,2}|Q)}$$

**FIG. 7**

Generate a full N-dimensional symbol constellation.

801

Generate a punctured N-dimensional symbol constellation.

802

Generate a sequence of symbols by mapping a message onto the punctured N-dimensional symbol constellation.

803

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006041821 A1

- US 2006045197 A1

**Non-patent literature cited in the description**

- **ANDREW L. MCKELLIPS.** Simple Tight Bounds on Capacity for the Peak-Limited Discrete-Time Channel. *proceedings of the IEEE Int. Symp. Inf. Theory,* 2004

- **JOEL G. SMITH.** Odd-Bit Quadrature Amplitude-Shift Keying. *IEEE Trans. Comm.,* March 1975, 385-389